# EUROPEAN PATENT APPLICATION

(11) **EP 0 753 816 A1**
(43) Date of publication of application: **15.01.1997**
(21) Application number: 96109806.8
(22) Date of filing: 19.06.1996
(51) Int. Cl.: G06F 12/14

(54) **A method and apparatus for storing sensitive information securely in a relatively insecure storage medium**

(30) Priority: 07.07.1995 US 499170
(71) Applicant: THOMSON CONSUMER ELECTRONICS, INC., Indianapolis, IN 46206 (US)
(72) Inventor: Rohatgi, Pankaj, Sunnyvale CA 94086 (US)
(74) Representative: Ahrens, Thomas, Dipl.-Phys.

(57) **Abstract**

A method is disclosed for storing sensitive information securely in a computer system which includes a relatively secure storage medium and a relatively insecure storage medium. First, the sensitive information is encrypted using an encryption key. Then the encrypted sensitive information is stored in the relatively insecure storage medium and the encryption key is stored in the relatively secure medium. Apparatus is also disclosed for storing sensitive information securely in a computer system which includes a relatively secure storage medium (208) in which an encryption key (302) is stored, and a relatively insecure storage medium (108;104). An encrypter (202) encrypts the sensitive information using the encryption key, and stores the encrypted sensitive information in the relatively insecure storage medium.

## Description

The present invention relates to a method and apparatus for storing sensitive information securely in a relatively insecure storage medium.

It is often necessary to store sensitive information, (e.g. credit card numbers or encryption keys) in a computer system. But storage of such sensitive information in an insecure manner can permit modification or stealing of that information. Restricting access to the computer system only to trusted people and running only trusted programs on the computer system is one solution to this problem. However, it is not always practical. There are computer systems which are intended for use by third parties, and remain relatively useless unless accessed by those third parties. For example, in a multimedia system such as an interactive television system, a user decoder will store sensitive user information, but by necessity will be made available to run programs written by unknown third parties.

An interactive television application consists of a video portion, an audio portion, and a computer program portion. The interactive television application is broadcast via a composite signal from a central broadcast location to remote viewer locations. Each viewer location has a receiver/decoder which detects and provides the composite interactive television application signal, separates the video, audio and computer program portions, generates the video and audio signals required by the television receiver, and executes the computer program to interact with the viewer. Each decoder also has a telephone interface, which, under computer program control (and with user permission) can place data calls for either transmitting information to or receiving information (including computer program code to execute) from a remote location.

One interactive application being considered is a shopping application in which the viewer's credit card number, which was previously entered into the decoder, is transmitted (with user permission) in a secure manner to the shopping program provider when the viewer places an order. Thus, it is necessary that the viewer's credit card number be stored in the decoder. However, it is also possible that a computer program could be loaded, via either the broadcast or telephone link, which might attempt to steal the viewer's credit card number, or other such sensitive information, and relay it to a third party via, for instance, the telephone link.

One method for securely maintaining sensitive information requires that hardware be attached to the computer system to provide a barrier between any publicly available portion of the computer system and the portion in which the sensitive information will be stored. But, a hardware solution is expensive. This is especially a problem in an interactive television system, which, being a consumer product, is extremely cost sensitive. Thus, the amount of secure hardware which will be made available in such systems will be designed to contain and protect a minimum of information. But there will potentially be a large amount of sensitive information which must be protected against theft. It is desirable to protect a relatively large amount of sensitive data from modification or theft while not requiring a large amount of expensive secure hardware.

In accordance with principles of the present invention, a method for storing sensitive information securely in a computer system, which includes a relatively secure storage medium and a relatively insecure storage medium, comprises the following steps. The sensitive information is encrypted using an encryption key. The encrypted sensitive information is stored in the relatively insecure storage medium and the encryption key is stored in the relatively secure medium.

Apparatus for storing sensitive information securely in a computer system includes a relatively secure storage medium in which an encryption key is stored, and a relatively insecure storage medium. An encrypter encrypts the sensitive information using the encryption key, and stores the encrypted sensitive information in the relatively insecure storage medium.

### BRIEF DESCRIPTION OF THE DRAWINGS

In the drawings:
Figure 1 is a block diagram of an interactive television decoder incorporating the present invention;
Figure 2, Figure 3 and Figure 4 are diagrams partially in block form and partially in data flow diagram form illustrating the operation of a set top box incorporating the present invention.
FIGURE 5 is a block diagram of a receiver in which the invention may be practiced.

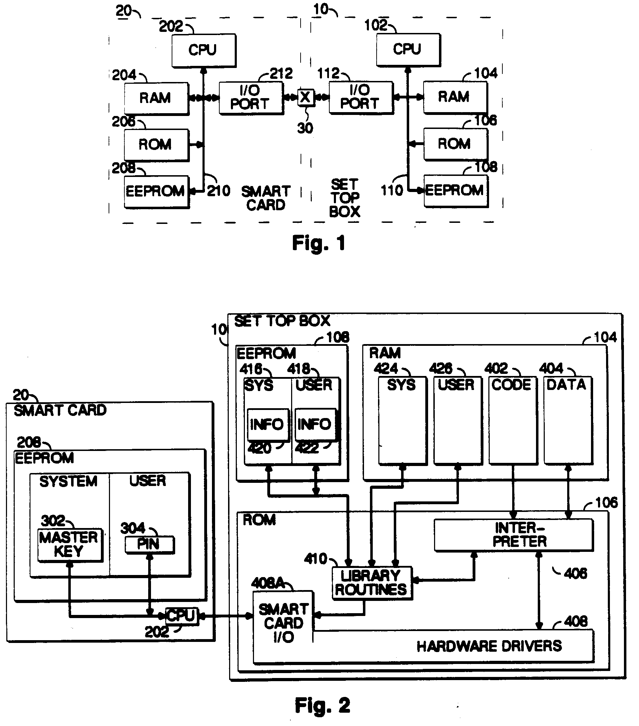

Figure 1 is a block diagram of an interactive television decoder incorporating the present invention. Figure 1 illustrates a set top box 10 coupled to a smart card 20. The smart card 20 is a small device, e.g. about the size of a credit card, which is inserted into a connector 30 in the set top box 10. The set top box 10 includes a CPU 102, coupled to a RAM 104, a ROM 106, an EEPROM 108 and an I/O port 112 in a known manner via a system bus 110. The set top box 10 also includes other I/O ports (not shown), also coupled to the system bus 110, e.g. for receiving a broadcast interactive television composite signal, for producing the video and audio signals for a television monitor and speakers, for connecting via the telephone system to a remote computer, and/or for connecting to a local personal computer at the viewer location. One skilled in the art of computer system design will understand how to design and build I/O adapters to provide these services and how to connect them to the system bus 110.

The smart card 20 includes a CPU 202 coupled to a RAM 204, a ROM 206, an EEPROM 208 and an I/O port 212 in a known manner via a system bus 210. The I/O port 112 in the set top box 10 is coupled to the I/O port 212 in the smart card 20 via the connector 30.

Figure 2 is a diagram partially in block form and partially in data flow diagram form useful in understanding the operation of the set top box 10 and smart card 20 illustrated in Figure 1. Elements in Figure 2 which are illustrated in Figure 1 are designated by the same reference numbers, and are not described in detail below. The lines illustrated in Figure 2 represent data flowing among the illustrated elements, and do not represent respective physical connections.

Referring to Figure 1, in operation the CPU 102 in the set top box 10 can retrieve data from the RAM 104, the EEPROM 108 and the input ports such as I/O port 112, can process that data, and can store processed data in the RAM 104, the EEPROM 108, or supply processed data to the output ports such as I/O port 112, all in a known manner, under control of the programs stored in the ROM 106. Referring to Figure 2, the EEPROM 108 is partitioned to include a system portion 416 which contains information 420 pertaining to the system, and a user portion 418 which contains information 422 pertaining to the user. Similarly, the RAM 104 is partitioned to include a system portion 424 which contains information pertaining to the system, and a user portion 426 which contains information pertaining to the user.

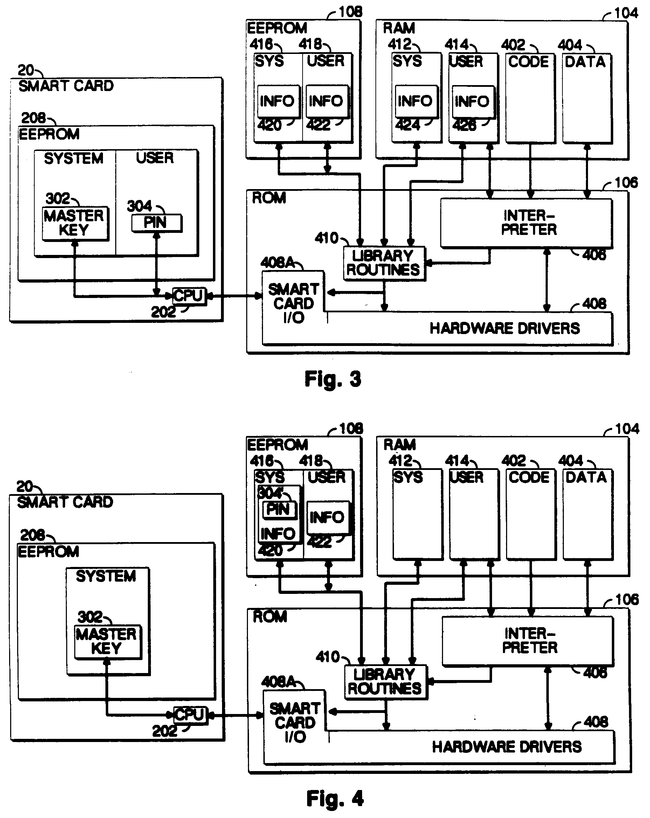

Interactive programs supplied to the set top box 10, via either the broadcast or the telephone link (not shown), are in the form of tokens which are interpreted in a known manner by an interpreter in the set top box 10. An interactive program consists of one or more code modules and possibly one or more data modules. Referring to Figure 4, the code module(s) are stored in the RAM 104 in a code section 402, and the data module(s) are stored in a data section 404. An interpreter 406, stored in the ROM 106, is executed by the CPU 102 in the set top box 10, and operates to interpret the code and data module(s) in the code and data sections, 402 and 404, of the RAM 104, respectively. The interactive program can read data from the data portion 404, process that data, and write modified data back to the data portion 404 under the control of the interpreter 406. The interpreter 406 also interacts with the hardware in the set top box 10, in a known manner, via program calls to hardware drivers 408, also stored in the ROM 106.

A set of library routines 410, which are accessible via program calls from the interpreter 406, are provided for commonly desired functions. It is only through proper calls to the library routines 410 that the smart card I/O driver 408A, the EEPROM 108, and the system and user portions of the RAM 104, 424 and 426, respectively, are accessible. The library routines 410 can be preprogrammed to solicit and receive user permission before returning sensitive information to the interactive program from any of these sources. In essence, the library routines 410 act as a software gatekeeper for the data stored in the EEPROM 108 and the system and user portions of the RAM 104, 424 and 426, respectively. Because of the gatekeeping function of the library routines 410, the EEPROM 108 and the system and user portions of the RAM 104, 424 and 426, respectively, are relatively more secure storage media than the code and data portions of the RAM 104, 402 and 404, respectively. In addition, because the EEPROM 108 is physically separated from the RAM 104, the EEPROM 108 is a relatively more secure storage medium than the RAM 104.

Referring again to Figure 1, the CPU 202 in the smart card 20 is programmed to accept data from the set top box 10 via the I/O port 212, process that information, and supply information back to the set top box 10 via I/O port 212, all under control of the program stored in the ROM 204. Only those operations which have been preprogrammed into the ROM 204 can be performed by the CPU 202 in the smart card 20. For example, at the time of purchase of the set top box 10, a master key, which both uniquely identifies the purchaser and acts as a decryption (and encryption) key, is supplied to the smart card 20 through the I/O port 212. The master key is very sensitive information. The CPU 202 in the smart card 20 is programmed to store the master key in the EEPROM 208. Referring to Figure 2, the EEPROM 208 in the smart card 20 may be partitioned into a system portion and a user portion. The CPU 202 stores the master key 302 in the system portion of the EEPROM 208.

Referring again to Figure 1, when encrypted data is received by the set top box 10 from the broadcaster and must be decrypted, the encrypted data is supplied to the smart card 20 via the I/O port 212. The CPU 202 in the smart card 20, using the master key 302 previously stored in the EEPROM 208, decrypts the encrypted data and returns the plaintext data back to the set top box 10 via the I/O port 212. The CPU 202 similarly will encrypt plaintext supplied to it via the I/O port 212, and supply encrypted data back to the set top box 10 via the I/O port 212. Because the CPU 202 is not programmed to return the master key 302 to the set top box 10, it is impossible for a program running on the set top box 10 to modify or to acquire, and possibly to steal, the master key 302. The CPU 202 operates as a hardware gatekeeper for the data stored in the smart card 20, which, therefore, is a very secure storage medium, relatively more secure than the EEPROM 108 or RAM 104 in the set top box 10.

As described above, the EEPROM 108 and the RAM 104 in the set top box 10 are not protected by a hardware gatekeeper, such as the CPU 202 in the smart card 20. Instead, protection of the EEPROM 108 and the RAM 104 is implemented in software via the library routines 410. However, because the EEPROM 108 and the RAM 104 are protected by software, there is always the possibility that the protection can be breached by other software, either accidentally or intentionally. An interactive program can potentially gain access to the EEPROM 108 or the RAM 104 by spoofing the protection software. For example, inaccurate data may be supplied to a program loader (not shown) during the relocation process, or the program stack (not shown) may be intentionally overflowed during execution of the program. In short, software protection may be overcome by other software.

As described above, the most secure storage medium is the smart card 20, the next most secure is the EEPROM 108 in the set top box 10, then the system 412 and user 414 portions of the RAM 104, and the least secure is the code 402 and data 404 portions of the RAM 104. To ensure maximum security for sensitive information, it should be stored in the EEPROM 208 in the smart card 20, in the same manner as the master key 302. However, the size of the EEPROM 208 in the smart card 20 is limited, and there may be room to store only an extremely small amount of sensitive information (other than the master key 302), or possibly none at all. The size of the EEPROM 108 in the set top box 10 is similarly limited, and there may be space for storage of only a limited amount of sensitive information, or none at all. Thus, the majority of sensitive user information must be stored in the RAM 104, which is the least secure storage medium.

To provide for secure storage of a larger amount of sensitive information than is available in the smart card 20, the sensitive information is first encrypted (using e.g. the Data Encryption Standard or DES) by the CPU 202 in the smart card 20, as described above, using the master key 302 stored in the smart card 20. The encrypted sensitive information may then be stored in the relatively less secure EEPROM 108, or the system 412 or user 414 portions of the RAM 104. Furthermore, to protect against modification of the sensitive information, a cryptographic checksum over the sensitive information is also calculated and appended to the information, e.g. by using a one-way cryptographic hash function such as the publicly available hash function MD5. ( MD5 is available on diskette from Counterpane Systems, 730 Fair Oaks Ave., Oak Park Illinois, 60302.) Checksums may be generated over the plaintext sensitive information, or over encrypted sensitive information or both. In the preferred embodiment, checksums are generated over encrypted sensitive information. Checksums may be generated via software using the CPU 202 or the CPU 102, or in a dedicated hardware hash function element (not shown) coupled to the bus structure. Any program which does get access to the encrypted sensitive information cannot decrypt and read it without the master key 302, which is stored in the smart card 20. Furthermore, any attempt to modify the encrypted information will be detected by a discrepancy between the previously calculated cryptographic checksum appended to the information, and a similarly calculated cryptographic checksum over the newly retrieved sensitive information.

Before the smart card 20 will decrypt any data, it solicits user permission. This is done by asking the user for a personal identification number (PIN) which preferably is a 4 to 6 character identifier. The PIN may be initially selected by the set top box 10 vendor, and subsequently changed by the user. If the PIN supplied by the user matches a currently stored PIN, the data is decrypted. If an incorrect PIN is entered some predetermined consecutive number of times in a row, e.g. four times, it is assumed that someone other than the user is attempting to break into the set top box 10, and the master key 302 is disabled altogether.

Referring to Figure 2, for maximum security, the PIN 304 is stored in the smart card 20. Because the PIN 304 is only four to six characters, which can be stored in four to six bytes, there may be enough free storage in the EEPROM 208 in the smart card 20 to store the PIN 304. The CPU 202 in the smart card 20 would be programmed to not release the PIN 304, making the storage of the PIN 304 very secure. Only if the viewer supplies the correct PIN 304 will the smart card 20 decrypt the sensitive data for the requesting program. This puts the release of sensitive data securely under the control of the viewer.

Sensitive information that the user wants to retain in case of a power failure, such as secondary cryptographic keys, credit card numbers, etc., is stored in the EEPROM 108 of the set top box 10. This information is encrypted using the master key 302 in the smart card 20. Encrypted sensitive system information 420 is then stored in the system portion 416 of the EEPROM 108 in the set top box 10; and encrypted sensitive user information 422 is stored in the user portion 418 of the EEPROM 108. Any rogue program which obtains access to the encrypted sensitive system or user information, 420 and 422, respectively, must request the smart card 20 to decrypt it, and the smart card 20 will not do so unless it receives an accurate PIN from the user. Any attempt to break into the smart card by sending PINs randomly will disable the master key 302 completely after several unsuccessful attempts.

However, as discussed above, the EEPROM 108 also has limited space available for storage of sensitive information. Thus, only important information which must be retained in the case of a power failure is stored in the above manner in the EEPROM 108. Referring to Figure 3, a larger amount of sensitive information may be stored in the relatively less secure RAM 104. This information is encrypted and a cryptographic checksum appended using one of the secondary cryptographic keys stored in encrypted form in the system portion 416 of the EEPROM 108. Encrypted sensitive system information is stored in the system portion 412 of the RAM 104, and encrypted sensitive user information is stored in the user portion 414 of the RAM 104. Because the memory demands on the RAM 104 are lower, a larger amount of sensitive information may be stored in the RAM 104.

To access this information, the encrypted secondary encryption key stored in the EEPROM 108 must first be decrypted. Because the secondary encryption key was itself previously encrypted using the master key 302 stored in the smart card 20, as described above, it may only be decrypted by the smart card 20, after receiving user permission, also as described above. Once the decrypted secondary key is returned from the smart card 20, it may be used to decrypt the sensitive information stored in the RAM 104. Because more space is available in the RAM 104 than in the EEPROM 108 or the smart card 20, a larger amount of sensitive information may be stored in the RAM 104. This information is still secure against unauthorized access because the master key stored in the smart card 20 is ultimately required to decrypt it. It is also possible to encrypt the sensitive information stored in the RAM 104 using the master key 302.

Referring to Figure 4, the above technique may be used even if there is insufficient storage space in the smart card 20 to store the user PIN. In Figure 4, only the master key 302 is stored in the smart card 20. The PIN is encrypted, and a cryptographic checksum appended, using the master key 302, and the encrypted PIN 304' is stored as part of the system information 420 in the system portion 416 of the EEPROM 108 in the set top box 10. In the implementation illustrated in Figure 4, when the smart card 20 is requested to decrypt data, it retrieves the encrypted PIN 304' from the EEPROM 108, and decrypts it and compares its cryptographic checksum with the previously stored cryptographic checksum. If the cryptographic checksum is the same, then a PIN is solicited from the user and compared to the decrypted PIN. If they are the same, then the desired information is decrypted. As above, a series of incorrect PIN numbers will disable the operation of the master key 302. Also as above, sensitive information may be encrypted and stored in the RAM 104.

A specific embodiment of a set top box 10, will generate, store and manage its own public-private key pair. In such embodiment the set top box, or BOX, is arranged to employ a Rivest, Shamir and Adleman public key algorithm, RSA, for signatures. An RSA algorithm requires generation and storage of two prime numbers p and q with p less than q and each of size BOX_PUBLIC_MODULUS_SIZE/2, and an arbitrary exponent "e" of size BOX_EXPONENT_SIZE. The three values p, q, e provide all the information necessary to derive all other parameters to perform RSA cryptography. However, since it is undesirable to incur the computational penalty to derive the other parameters for each signature or query for public keys, the system only generates parameters once (or at least each time the BOX resets) and stores the respective values for repeated use. The values should be stored in secure non-volatile memory in the BOX, however such storage may be limited as indicated above. Therefore the values are stored securely in RAM such that the integrity and confidentiality of the data is insured.

The foregoing is accomplished as follows. The values p and q are generated or provided, and a BOX modulus "n" is calculated by either the BOX CPU 102 or the smart card CPU 202 according to n = p times q. A value BOX EXPONENT, "e", is selected or is predetermined and stored in non-volatile storage such as EEPROM 108. Values n and e are stored as plaintext in the RAM 104 for ease of access. The values n and e form the public key and therefore are made public knowledge in a public key system, and thus need not be maintained in secret. The values p and q are generated using a pseudo random number generator which is initially conditioned with a seed word of 128 bits. The pseudo random number generator may comprise, at least in part, a hash function such as MD5, and which may be performed in software by the CPU.

Further values (for providing the private key) are calculated by the CPU as follows:
1. dp = e⁻¹(mod(p-1))
2. dq = e⁻¹(mod(q-1))
3. p⁻¹(mod q)
4. p0prime and q0prime ( single unit values used for Montgomery reduction).

The values 1-4 are encrypted with a randomly selected DES key K, and the encrypted data is stored in the RAM 104. A hash (e.g. MD5) is performed on at least this data in the RAM to generate a checksum C. The values p, q, e, K and C are stored in secure non-volatile storage 208. A checksum is generated over the data stored in the secure storage and appended thereto. In this way, both the integrity and the confidentiality of the data in RAM 104, which is relatively insecure, is maintained.

Before the data in the RAM may be utilized, a checksum is performed over the secure data in non-volatile memory and checked against the appended checksum. If they are identical the checksum C is accessed from the secure non-volatile storage 208 and an integrity check is made on RAM data. That is, a hash is performed on the RAM data to generate a further checksum C*, which is then compared with the corresponding checksum C. If this or the prior comparison fails, the data is presumed to be corrupted, and the secure data and RAM storage data are set to default values. If the checksums are identical, then the key K is accessed and the relevant RAM data is decrypted and utilized. That is, items 1-4 are accessed and used in private key encryption. The DES encryption is performed by the smart card 20, which is the preferred approach. Alternatively, the BOX may include separate encryption/decryption hardware, which may be accessed to perform the DES encryption and decryption of the values in RAM.

Using the above techniques permit the storage of a relatively large amount of sensitive information securely in a relatively less secure storage medium by encrypting that information using an encryption key stored in a relatively more secure storage medium and storing the encrypted sensitive information in the relatively less secure storage medium.

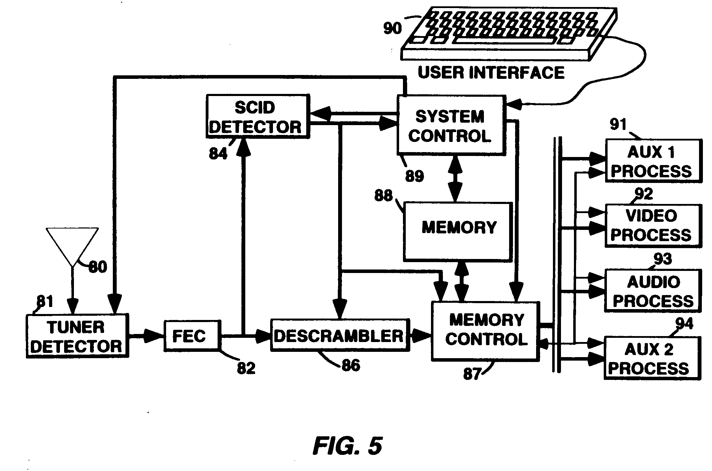

FIGURE 5 illustrates in block form a multimedia or interactive television receiver. Signal is detected by an antenna 80 and applied to a tuner detector, 81, which extracts a particular frequency band of received signals, and provides a baseband multiplexed packet signal. The frequency band is selected by the user through a system controller 89 (hereafter IRD controller) by conventional methods. Nominally broadcast signals will have been error encoded using, for example, Reed-Solomon forward error correcting (FEC) coding. The baseband signals will thus be applied to a FEC decoder, 82. The FEC decoder 82 synchronizes the received video and provides a stream of error corrected signal packets. The FEC 82 may provide packets at regular intervals, or on demand, by for example, memory controller 87. In either case a packet framing or synchronizing signal is provided by the FEC circuit, which indicates the times that respective packet information is transferred from the FEC 82.

Only packets from a single program signal may be processed by the receiver. In this example it is assumed that the user has no knowledge of which packets to select from the multiplexed packet stream. This information is contained in a program guide, which is itself a program consisting of data which interrelates program signal components through their respective service channel ID's or SCID's. The program guide is a listing for each program, including the SCID's for the audio, video, and data components of respective programs. The program guide is assigned a fixed SCID. When power is applied to the receiver, the IRD controller 89 is programmed to load the SCID associated with the program guide into a SCID detector 84, which may be a bank of matched filters. When the program guide SCID is detected, the memory controller 87 is conditioned to route the corresponding packet payload to a predetermined location in the memory 88 for use by the IRD controller.

The IRD controller waits for a programming command from the user via an interface 90, which is shown as a keyboard, but which may be a conventional remote control, or receiver front panel switches. The user may request to view a program provided on channel 4 (in the vernacular of analog TV systems). The IRD controller 89 is programmed to scan the program guide list that was loaded in the memory 88 for the respective SCID's of the channel 4 program components, and to load these SCID's in the SCID detector 84.

Received packets of audio, video or data program components, for a desired program, must ultimately be routed to the respective audio 93, video 92, or auxiliary data 91, (94) signal processors respectively. The data is received at a relatively constant rate, but the signal processors nominally require input data in bursts (according to the respective types of decompression for example). The exemplary system of FIGURE 5, first routes the respective packets to predetermined memory locations in the memory 88. Thereafter the respective processors 91-94 request the component packets from the memory 88. Routing the components through the memory provides a measure of desired signal data rate buffering or throttling.

The audio, video and data packets are loaded into respective predetermined memory locations to enable the signal processors easy access to the component data. Payloads of respective component packets are loaded in the appropriate memory areas as a function of the corresponding SCID's, and control signals provided by the SCID detector. This association may be hardwired in the memory controller 87, or the association may be programmable.

The respective signal packets are coupled from the FEC 82 to the memory controller 87 via a signal descrambler 86. Respective signal packets include a header and a payload. Only the signal payloads are scrambled and the packet headers are passed by the descrambler unaltered. Whether or not a packed is to be descrambled is determined by a flag in the packet header, and how it is to be descrambled is directed by a second flag in the packet header. This packet scrambling is substantially independent of the application module security processing described above.

An interactive system may include a number of devices capable of operating with the data portion of a multimedia signal. For example in FIGURE 5 both of the AUX1 and AUX2 processors may be responsive to the data portion of the signal. The AUX1 processor may be a personal computer, PC, arranged to detect transmitted stock market data and to manipulate same with a transmitted interactive application. AUX2 may be a television system arranged to permit interactive impulse buying in conjunction with transmitted interactive commercials. Note, interactivity may be facilitated with the aid of a telephone modem (not shown) interconnected with FIGURE 5 system. In addition the IRD controller 89 may be programmed to process and execute transmitted applications, particularly for system maintenance.

The foregoing description of storing sensitive information in this example is performed by the system controller 89, which is presumed to include ROM, secure non-volatile storage and a smart card. The RAM 104 may consist of a predetermined block of the memory 89. The hardware drivers 408 are included in the memory control 87. In this example all of the items in FIGURE 5 are included in the set top box.

## Claims

1. In a computer system, including a relatively more secure storage medium and a relatively less secure storage medium, a method for storing sensitive information in the relatively less secure storage medium, characterized by the steps of:
encrypting the sensitive information using an encryption key;
storing the encrypted sensitive information in the relatively less secure storage medium; and
storing the encryption key in the relatively more secure storage medium.

2. The method of claim 1 in which the relatively secure storage medium includes a processor and a memory, characterized in that:
the step of storing the encryption key comprises the steps of:
supplying the encryption key to the processor; and
transferring the encryption key from the processor to the memory; and
the step of encrypting the sensitive information comprises the steps of:
supplying the sensitive information to the processor;
encrypting the sensitive information in the processor using the encryption key previously stored in the memory; and
returning the encrypted sensitive information from the processor for storage in the relatively less secure storage medium.

3. The method of claim 1 further characterized by the steps of:
retrieving the encrypted sensitive information from the relatively insecure storage medium;
decrypting the retrieved encrypted sensitive information using the encryption key.

4. The method of claim 1 in which the relatively secure storage medium includes a processor and a memory, characterized in that the step of decrypting the sensitive information comprises the steps of:
supplying the retrieved encrypted sensitive information to the processor;
decrypting the retrieved sensitive information in the processor using the encryption key; and
returning the decrypted sensitive information from the processor.

5. The method of claim 3 characterized in that:
the step of encrypting the sensitive information comprises the step of calculating a cryptographic checksum over the encrypted sensitive information;
the step of storing the encrypted sensitive information includes the step of storing the cryptographic checksum;
the decrypting step comprises the steps of:
retrieving the previously stored cryptographic checksum;
calculating a cryptographic checksum over the stored encrypted sensitive information;
comparing the previously stored cryptographic checksum to the newly calculated cryptographic checksum; and
if the previously stored cryptographic checksum does not match the newly calculated cryptographic checksum, reporting an error.

6. The method of claim 3 further characterized by, before the retrieving step, the steps of:
requesting authorization from a user; and
performing the retrieving and decrypting steps only if authorization is received from the user.

7. The method of claim 6 characterized in that the step of requesting authorization comprises the steps of:
requesting an identification string from the user;
receiving an identification string from the user;
comparing the received identification string to a predetermined identification string; and
if the received identification string matches the predetermined identification string, then determining that authorization is received from the user.

8. The method of claim 7 characterized in that the step of storing the encryption key comprises the step of storing the predetermined identification string in the relatively more secure storage medium.

9. The method of claim 7 characterized in that:
the step of storing the encryption key comprises the steps of:
encrypting the predetermined identification string using the encryption key; and
storing the encrypted predetermined identification string in the relatively less secure storage medium; and
the comparing step comprises the steps of:
retrieving the encrypted predetermined identification string from the relatively less secure storage medium;
decrypting the encrypted predetermined identification string using the encryption string; and
comparing the identification string from the user to the decrypted predetermined identification string.

10. The method of claim 9 characterized in that:
the step of encrypting the predetermined identification string comprises the step of calculating a cryptographic checksum over the predetermined identification string;
the step of storing the encrypted predetermined identification string comprises the step of also storing the cryptographic checksum in the relatively less secure storage medium;
the step of retrieving the encrypted predetermined identification string comprises the step of also retrieving the previously stored cryptographic checksum; and
the step of decrypting the encrypted predetermined identification string comprises the steps of:
calculating a cryptographic checksum over the predetermined identification string;
comparing the calculated cryptographic checksum to the retrieved cryptographic checksum; and
performing the step of comparing the received identification string to the decrypted predetermined identification string only if the calculated cryptographic checksum matches the retrieved cryptographic checksum.

11. The method of claim 1 characterized in that:
the step of encrypting the sensitive information comprises the step of calculating a cryptographic checksum over the encrypted sensitive information and
the step of storing the encrypted sensitive information comprises the step of storing the cryptographic checksum with the encrypted sensitive information.

12. Processor apparatus in an interactive television system for storing sensitive information securely, characterized by:
a relatively more secure storage medium (208) for storing an encryption key;
a relatively less secure storage medium (108;104);
an encrypter (202), coupled to the relatively less secure storage medium and responsive to the encryption key (302), for encrypting the sensitive information and storing the encrypted sensitive information in the relatively less secure storage medium.

13. The apparatus of claim 12, further characterized by a decryptor, coupled to the relatively less secure storage medium and responsive to the encryption key, for retrieving encrypted sensitive information from the relatively less secure storage medium and decrypting the encrypted sensitive information.

14. The apparatus of claim 13 characterized in that the decryptor comprises circuitry for requesting authorization from a user and retrieving encrypted sensitive information from the relatively less secure storage medium and decrypting the encrypted sensitive information only if authorization is received from the user.

15. The apparatus of claim 14 characterized in that the circuitry for requesting authorization comprises:
circuitry for requesting an identification string from the user;
circuitry for receiving an identification string from the user;
circuitry for comparing the received identification string to a predetermined identification string and determining that authorization is received if the received identification string matches the predetermined identification string.

16. The apparatus of claim 15 wherein the predetermined identification string is stored in encrypted form in the relatively less secure storage medium, and the decryptor is further characterized by:
circuitry for retrieving the encrypted predetermined identification string from the relatively less secure storage medium; and
circuitry for decrypting the retrieved encrypted predetermined identification string.

17. The apparatus of claim 12, characterized in that the relatively more secure storage medium comprises:
a microprocessor; and
a memory, coupled to the microprocessor via a system bus, for storing the encryption key; wherein:
the encrypter and decryptor are comprised in the microprocessor.

18. The apparatus of claim 17, characterized in that the relatively less secure storage medium comprises:
a further microprocessor; and
a read/write memory, coupled to the microprocessor via a system bus, for storing the encrypted sensitive information.

19. The apparatus of claim 18, characterized in that:
the relatively more secure storage medium further comprises an input/output port, coupled to the microprocessor and the memory in the relatively more secure storage medium via the system bus in the relatively more secure storage medium;
the relatively less secure storage medium further comprises an input/output port, coupled to the further microprocessor and the read/write memory in the relatively less secure storage medium via the system bus in the relatively less secure storage medium; and
the input/output port in the relatively more secure storage medium is coupled to the input/output port in the relatively less secure storage medium.

20. The apparatus set forth in claim 12 further characterized by:
circuitry for generating a checksum over said encrypted sensitive information and appending said checksum to stored said encrypted sensitive information;
circuitry for generating a further checksum over stored said encrypted sensitive information, and comparing said further checksum to said checksum appended to said stored encrypted sensitive information; and
a decryptor, conditioned by said checksum and said further checksum being identical, decrypting said stored encrypted sensitive information.
